# EUROPEAN PATENT SPECIFICATION

(11) **EP 1 155 351 B1**
(45) Date of publication and mention of the grant of the patent: **06.11.2002**
(21) Application number: 00902814.3
(22) Date of filing: 14.02.2000
(51) Int. Cl.: G02F 1/1335

(54) **LIQUID CRYSTAL DISPLAY**
FLÜSSIGKRISTALLANZEIGEVORRICHTUNG
AFFICHAGE A CRISTAUX LIQUIDES

(30) Priority: 17.02.1999 GB 9903459; 28.06.1999 GB 9914908
(43) Date of publication of application: 21.11.2001
(73) Proprietor: CENTRAL RESEARCH LABORATORIES LIMITED, Hayes, Middlesex, UB3 1HH (GB)
(72) Inventor: MOSLEY, Alan, Berkhamsted, Hertfordshire HP4 1EU (GB)
(74) Representative: Sharp, Alan Cooper
(86) International application number: GB0000497
(87) International publication number: WO00049453

(56) References cited:
- US-A- 5 686 979
- US-A- 5 841 494
- US-A- 5 986 730
- PATENT ABSTRACTS OF JAPAN vol. 1998, no. 08, 30 June 1998 (1998-06-30) & JP 10 078582 A (CASIO COMPUT CO LTD), 24 March 1998 (1998-03-24) & US 6 025 894 A 15 February 2000 (2000-02-15)

## Description

### Technical Field

The present invention relates to a liquid crystal display.

### Background Art

Liquid crystal displays (LCDs) are passive optical devices which are illuminated with a light source in order to produce an image. LCDs may be classified according to the type of light source used to illuminate the display. Where the source of light is ambient light, the display is known as a reflective display. In this type of display, the LCD is placed between a viewer and a reflective surface which is attached to the rear polarizer of the LCD. In this arrangement, the reflective surface reflects light originating from an external source. Reflective LCDs work well in strong ambient light, but are very dim in low ambient lighting conditions.

If a backlight is used in an LCD, then the display is known as a transmissive display. Transmissive displays are useful where the amount of ambient light cannot be guaranteed. However, a disadvantage of these displays is that they have a higher energy consumption than reflective displays. Another disadvantage of transmissive displays is that it is possible for the display image to be severely degraded (or "washed out") in the presence of strong ambient lighting. This is due to reflection of the ambient light at the front surface of the LCD.

Alternatively, if a combination of ambient light and a backlight is used, then the display is known as a transflective display. These displays use ambient lighting when it is available, and a backlight only when necessary. Typically, the transflective material is attached to the rear of a display and, for example, transmits 40% of the light from the backlight, and reflects 60% of the light from ambient lighting. While a transflective LCD works reasonably well in both high and low ambient lighting, its performance is poor compared with purely transmissive or reflective displays.

Japanese Patent Application No.10-078582 (Casio) discloses a display device which has good contrast in bright and dark conditions, and is low in power consumption. The device includes an organic light emitting element arranged at the back of a liquid crystal display panel, the element functioning as a backlight and a reflection element. The light emitting element comprises organic light emitting material sandwiched between a first electrode, and a second reflective electrode. The reflective electrode is formed so that it diffuses light. Thus the viewing angle of the display is increased. The device also includes a number of polarization layers. A first polarization layer is positioned at the front of the display panel, and a rear polarization is positioned the back of the display panel, adjacent the light emitting element.

Due to the positioning of the diffuser towards the back of the device, in the reflective mode of operation some of the light exiting the rear polarizer will be depolarized. This will lead to this light being lost, as it will be absorbed by the rear polarizer. As a result the polarization of the light passing back through the device will be disadvantageously affected. The effect of this is to reduce the maximum brightness of the device in the reflective mode, which in turn will reduce the contrast ratio of the device.

An aim of the present invention is to provide a liquid crystal display that can operate in both low and high ambient light.

### Disclosure of Invention

According to a first aspect of the invention there is provided a liquid crystal display capable of operating in a transmissive mode and a reflective mode, the display comprising: a) a liquid crystal device; b) an electro-optic element comprising a substantially optically transparent first electrode, a second reflective electrode, and a layer of light emitting material disposed therebetweeen, and c) a diffusing means in order to increase the viewing angle of the display, wherein in the transmissive mode the electro-optic element functions as a backlight and in the reflective mode the electro-optic element functions as a reflector, wherein the diffusing means does not affect the polarization of light passing therethrough.

The liquid crystal device typically consists of a first transparent substrate, a second transparent substrate, and a volume of liquid crystal material disposed therebetween. The liquid crystal material is preferably transmissive in at least one of its states. If the liquid crystal material is of guest-host type (i.e., a dichroic dye dissolved in the liquid crystal), then the liquid crystal device may be used with no polarizer, or with a first polarizing means. Alternatively, for other types of liquid crystal material (such as twisted nematic liquid crystal material), the liquid crystal display preferably includes a further polarizing means. The liquid crystal device is then preferably disposed between the first polarizing means and the further polarizing means.

The electro-optic element comprises a substantially optically transparent first electrode, a second electrode, and a layer of substantially optically transparent light emitting material disposed therebetween.

Preferably the light emitting material is substantially optically isotropic so that the polarisation of the light passing through the light emitting material is not substantially altered.

Preferably the light emitting layer is colourless so that the colour of the light passing through the light emitting layer is not substantially altered.

The electro-optic element preferably also includes a layer of hole transporting material and/or a layer of electron transporting material. The layer of hole transporting material and/or electron transporting material is preferably substantially optically isotropic so that the polarisation of light passing through the material(s) is not substantially altered. Preferably the layer of hole transporting material and/or electron transporting material is substantially optically transparent and/or colourless, so that the colour of the light passing through the material(s) is not substantially altered.

Preferably the layer of transparent light emitting material is disposed between the layer of hole transporting material and the layer of electron transporting material. Each layer is preferably less than 100 nm thick, and most preferably less than 60 nm thick. The inclusion of a layer of hole transporting material and/or a layer of electron transporting material improves the efficiency of the electro-optic element when it is functioning as a backlight, as more electrical energy may be converted into light than by using only transparent light emitting material.

The reflective second electrode is advantageously adjacent the layer of electron transporting material, and is preferably aluminium, magnesium, or other metal or alloy which has a low work function such as silver, or calcium. If, however, a layer of electron transporting material is not used, the aluminium layer may be situated adjacent the light emitting material layer. The aluminium layer, as well as reflecting light, is also a source of electrons.

The first electrode acts as an anode, and is preferably a layer of Indium Tin Oxide (ITO), or Tin Oxide. This layer may be disposed adjacent the hole transporting material layer (if used), or adjacent the light emitting layer.

The first electrode and/or second electrode may be patterned, or unpatterned.

The optically transparent light emitting material, and the hole and electron transporting materials, are preferably organic materials. The layers of organic material may be patterned, or unpatterned. The light emitting material may be, for example, an organolanthanide. An example of such an organic material is described in published International Patent Application Number WO-A1-9855561 (ISIS Innovation Limited). The hole transporting material preferably includes a substituted aromatic diamine. The electron transporting material preferably includes a derivative of triazole.

The electro-optic element preferably also includes a means of applying a voltage to the first electrode and the second electrode. This voltage may be between 1 and 30 Volts. Preferably, the voltage is between 3 and 15 Volts. A current is generated in the layers of organic material which in turn causes the light emitting material to emit light, thus illuminating the liquid crystal display when the electro-optic device is operating as a backlight.

As the surface of the second electrode of the electro-optic element is typically smooth and mirror-like, it acts as a specular reflector. In order to improve the viewing angle of the display, a diffusing means is provided. The diffusing means scatters light and essentially provides Lambertian (rather than specular) reflectivity, thereby increasing the viewing angle of the display. The diffusing means is composed of a material which does not affect, i.e., maintains the polarisation of light passing through it. The diffusing means may comprise a diffusing layer. The diffusing layer may include a polymer.

The diffusing layer may be disposed a) adjacent the first polarizing means, b) between the first polarizing means and the liquid crystal device, c) between the liquid crystal device and the further polarizing means, or d) between the further polarizing means and the electro-optic element.

Alternatively, the diffusing means may be formed as part of the electro-optic element. This may be achieved by forming the second (reflective) electrode such that it diffuses light. In an alternative embodiment, the liquid crystal material may be optically scattering in one of its states, so that a separate diffusing layer is not required.

The liquid crystal display may include a further layer of transparent material, such as, for example, glass. This further layer of transparent material is preferably disposed adjacent the anode of the electro-optic element, and acts as a supporting layer during manufacture of the device.

An encapsulating layer is preferably placed adjacent the cathode of the electro-optic element. This may be glass, plastic, epoxy resin, or other suitable encapsulating material. This layer is preferably less than 0.5 mm thick. The layer may be bonded to the electro-optic element using, for example, an epoxy adhesive.

The electro-optic element may be disposed a) between the further polarizing means and the encapsulating layer, b) between the diffusing layer and the encapsulating layer, c) between the further layer of transparent material and the encapsulating layer.

A transmissive liquid crystal display having a thin light generating film which operates as a backlight (but not as a reflector for the display) is disclosed in US Patent No. 5,796,509 (IBM). However, the light generating film is not optically isotropic, and hence the polarisation of the light passing through the film is changed. This results in the display having low contrast. In addition, the display does not have a means for diffusing light and, as a result, the display does not have a wide viewing angle when viewed in high ambient light.

### Brief Description of the Drawings

A number of embodiments of the invention will now be described, by way of example only, with reference to the accompanying Figures, in which:-
Figure 1 shows a cross-section of a liquid crystal display having an organic light emitting backlight (prior art);
Figure 2 shows a cross-sectional view of a liquid crystal device;
Figure 3 shows a cross-sectional view of an organic light emitting backlight; and
Figures 4a, 4b, 4c, 4d and 4e show cross-sectional views of a liquid crystal display having a diffusive layer, according to the invention.

### Detailed Description of Preferred Embodiments

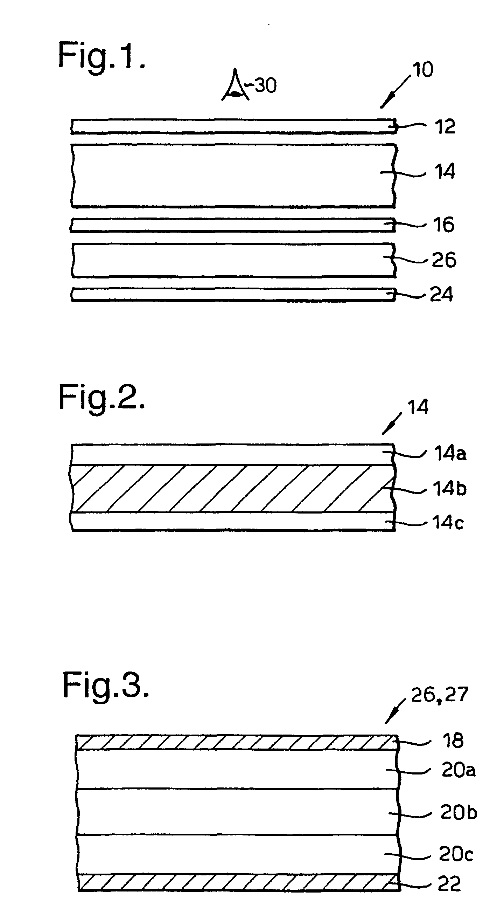

A liquid crystal display (10) known in the prior art is shown in Figure 1. The display (10) has a liquid crystal device (14) disposed between a front polarizer (12) and a rear polarizer (16), and a backlight (26) disposed adjacent the rear polarizer. An encapsulating layer (24) is attached to the rear of the display (10), adjacent the backlight. An eye (30) is positioned in front of display (10) in order to illustrate from which side a viewer sees the display.

The liquid crystal device (14) is shown in Figure 2, and typically comprises a volume of liquid crystal material (14b) disposed between front (14a) and rear (14c) layers of transparent substrate.

Referring now to Figure 3, this shows a cross-section of backlight (26) which is formed from a volume of organic light emitting material (20) sandwiched between an anode (18) and a cathode (22). The volume of organic light emitting material (20) is formed from a hole transporting layer (20a), a light emitting layer (20b), and an electron transporting layer (20c).

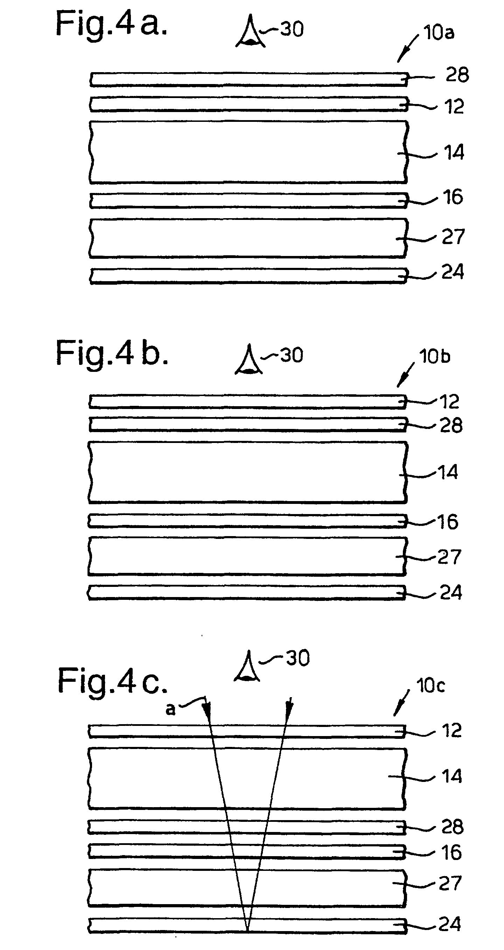

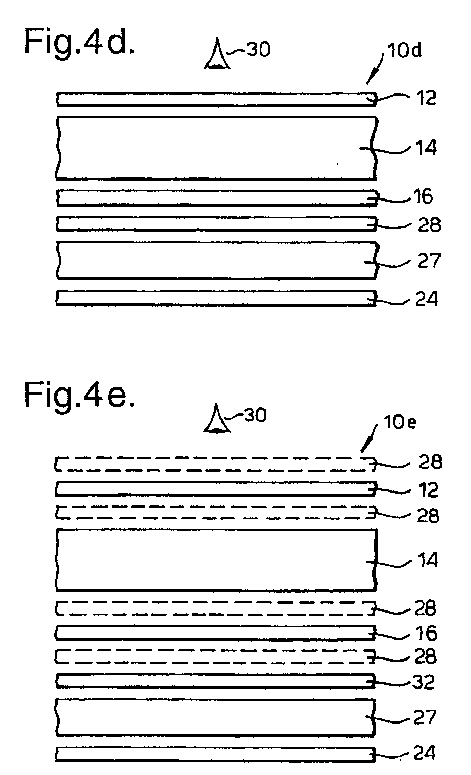

A number of embodiments of the invention are shown in Figure 4, and these will now be described. Figure 4a shows a liquid crystal display (10a) having a liquid crystal display device (14) disposed between a front polarizer (12) and a rear polarizer (16), and an electro-optic element (27) situated adjacent rear polarizer (16). The electro-optic element (27) has a reflective layer (22). A diffusing layer (28) is situated at the front of the display, adjacent the front polarizer (12).

Figure 4b shows a liquid crystal display (10b) having a liquid crystal display device (14) disposed between a front polarizer (12) and a rear polarizer (16), and an electro-optic element (27) situated adjacent rear polarizer (16). A diffusing layer (28) is disposed between the front polarizer (12) and the liquid crystal display device (14).

Liquid crystal display (10c) is shown in Figure 4c. Display (10c) has a liquid crystal display device (14) disposed between front polarizer (12) and rear polarizer (16), and electro-optic element (27) situated adjacent the rear polarizer (16). Diffusing layer (28) is disposed between the liquid crystal display device (14) and rear polarizer (16).

Liquid crystal display (10d) is shown in Figure 4d. Display (10d) has liquid crystal display device (14) disposed between front polarizer (12) and rear polarizer (16), and a diffusing layer (28) situated adjacent the rear polarizer (16). Electro-optic element (27) is positioned adjacent the diffusing layer (28).

Figure 4e shows a liquid crystal display (10b) having a liquid crystal display device (14) disposed between a front polarizer (12) and a rear polarizer (16), a glass layer (32) positioned adjacent rear polarizer (16), and an electro-optic element (27) situated adjacent glass layer (32). The positions in which the diffusing layer (28) may be placed are shown in this Figure by dotted lines.

The electro-optic device (27) is susceptible to degradation caused by the ingress of moisture and oxygen from the atmosphere via the reflective layer (22). In order to remove this problem, all of the displays (10a,b,c,d,e) shown in Figure 4 are encapsulated by bonding a thin layer of glass (24) to the rear of the reflective cathode (22).

The structure of the electro-optic element (27) is shown in Figure 3. Each of the layers (20a,b,c) of electro-optic element (27) is approximately 30 to 60 nm thick and optically transparent. Layers (20a,b,c) are also optically isotropic - that is, layers (20a,b,c) will not rotate or significantly alter the polarisation of the polarised light passing through the rear polarizer (16). Anode (18) is composed of a layer of ITO, and may be used to inject holes into layer (20a). Cathode (22) is composed of aluminium (or other suitable low work function metal or alloy) which acts as a good reflector. The cathode provides layer (20c) with electrons.

By including a diffusing layer in the display (10a,b,c,d,e), light reflected by the electro-optic element (27) is made diffuse rather than specular, thereby increasing the viewing angle of the display. Layer (28) may be placed at the front of the display, adjacent front polarizer (12), as shown in Figure 4a. Alternatively, layer (28) may be placed between the front polarizer (12) and the liquid crystal display (14), as in Figure 4b, between liquid crystal device (14) and the rear polarizer (16), as shown in Figure 4c, or between the rear polarizer (16) and electro-optic element (27), as shown in Figure 4d. If placed in the positions shown in Figures 4b, 4c and 4d, the diffusing layer must not affect the polarisation of the light passing through it. This may be achieved by using a polarisation preserving diffuser, such as the holographic diffuser Microsharp I™, manufactured by Microsharp Corporation Limited, UK.

During the manufacture of the display, the electro-optic element (27) is supported by a suitable substrate, such as glass. This is achieved by attaching a layer (32) of substrate to the ITO layer (18) of the electro-optic element (27). Alternatively, the electro-optic element (27) may be supported by the rear polarizer (16), as shown in Figures 4a, 4b, and 4c, or by diffusing layer (28), as shown in Figure 4d.

The use of glass substrate layer (32) is advantageous because glass substrates are usually used in the manufacture of liquid crystal displays. On the other hand, the use of such a layer may be disadvantageous, as the distance between the reflective surface of the electro-optic element (27) and the liquid crystal device (14) is increased by the inclusion of the glass layer (which may be more than 0.3 mm thick). This introduces the problem of parallax which degrades the image.

When the electro-optic element (27) is formed on the rear polarizer (16), the amount of parallax is the same as for conventional reflective or transflective liquid crystal displays. This is because the reflective surface (22) and the LCD (14) are only separated by the organic layer (20), the thickness of which is less than 1 micrometer.

The use of diffusing layer (28) as the substrate for supporting the electro-optic element (27), as shown in Figure 4d, gives a display which has less parallax than the display (10e) which incorporates glass substrate (32). This is because diffusing layer (28) is typically less than 100 micrometers thick.

Referring to Figure 4c, the operation of display (10c) will now be described. In bright ambient light, light passes through the display as indicated by arrow a. Light is scattered by diffusing layer (28), passes through the transparent organic material layer (20), and is reflected at the aluminium layer (22). As layers (20) are optically transparent, colourless, and optically isotropic, the performance of display (10c) when operating in reflective mode is comparable to a conventional purely reflective LCD. Additionally, the brightness of the display (10c) is substantially greater than that of a transflective LCD, and the diffusing layer (28) increases the viewing angle of the display.

In low ambient lighting conditions, a voltage of, for example, approximately 3 to 15 V is applied between the aluminium cathode (22) and the ITO anode (18). This causes current to flow in the organic material layer (20), which in turn leads to the emission of light from the light emitting layer (20b). Again, the performance of the display will be greater than that achieved with a conventional transflective display. This is because, for a transflective display, only 40% of the light from the backlight is transmitted by the transflector.

A liquid crystal display incorporating the invention provides good image quality in all ambient lighting conditions.

Another advantage of the invention is that the electro-optic element (when formed on a polarising layer) is very thin, typically less than 1 micrometer.

The invention has been described by a number of embodiments, and it will be appreciated that variation may be made to the embodiments without departing from the scope of the invention. For example, an electro-optic element may be provided without hole transporting layer (20a) and/or electron transporting layer (20c).

## Claims

1. A liquid crystal display (10a,b,c,d) capable of operating in a transmissive mode and a reflective mode, the display comprising: a) a liquid crystal device (14); b) an electro-optic element (27) comprising a substantially optically transparent first electrode (18), a second reflective electrode (22), and a layer of light emitting material disposed therebetweeen, and c) a diffusing means (28) in order to increase the viewing angle of the display, wherein in the transmissive mode the electro-optic element functions as a backlight and in the reflective mode the electro-optic element functions as a reflector, **characterised in that** the diffusing means maintains the polarization of light passing therethrough.

2. A liquid crystal display (10a,b,c,d) according to claim 1 wherein the diffusing means is a holographic diffuser.

3. A liquid crystal display (10a,b,c,d) according to claim 1 or 2 wherein the diffusing means is less than 100 micrometers thick.

4. A liquid crystal display (10a,b,c,d) according to claim 3 wherein the electro-optic element (27) further includes a layer (20a) of hole transporting material and a layer (20c) of electron transporting material, the layer (20b) of light emitting material disposed therebetween.

5. A liquid crystal display (10a,b,c,d) according to claim 4 wherein the layer (20a) of hole transporting material and/or the layer (20c) of electron transporting material are substantially optically transparent, substantially optically isotropic so that the polarization of the light passing therethrough is not substantially altered, and substantially colourless so that the colour of the light passing therethrough is not substantially altered.

6. A liquid crystal display (10a,b,c,d) according to any previous claim wherein the layer (20b) of light emitting material is substantially optically transparent, substantially optically isotropic so that the polarization of the light passing therethrough is not substantially altered, and substantially colourless so that the colour of the light passing therethrough is not substantially altered.

7. A liquid crystal display (10a,b,c,d) according to any of claims 4 to 6 wherein the second electrode (22) is disposed adjacent the layer (20a) of electron transporting material.

8. A liquid crystal display (10a,b,c,d) according to any of claims 4 to 7 wherein the first electrode (18) is disposed adjacent the layer (20a) of hole transporting material.

9. A liquid crystal display (10a,b,c,d) according to any preceding claim wherein the light emitting material includes an organolanthanide.

10. A liquid crystal display (10a,b,c,d) according to any of claims 4 to 9 wherein the hole transporting material includes an aromatic diamine.

11. A liquid crystal display (10a,b,c,d) according to any of claims 4 to 10 wherein the electron transporting material includes a derivative of triazole.

12. A liquid crystal display (10a,b,c,d) according to any preceding claim including a first polarizing means (12).

13. A liquid crystal display (10a,b,c,d) according to claim 12 including a further polarizing means (16).

14. A liquid crystal display (10a,b) according to claim 12 or claim 13 wherein the diffusing means (28) is disposed adjacent the first polarizing means (12).

15. A liquid crystal display (10b) according to any of claims 12 to 14 wherein the diffusing means (28) is disposed between the first polarizing means (12) and the liquid crystal device (14).

16. A liquid crystal display (10c) according to claim 13 wherein the diffusing means (28) is disposed between the liquid crystal device (14) and the further polarizing means (16).

17. A liquid crystal display (10d) according to claim 13 wherein the diffusing means (28) is disposed between the further polarizing means (16) and the electro-optic element (27).

18. A liquid crystal display (10a,b,c,d) according to any preceding claim wherein the second electrode is formed such that it diffuses light.

19. A liquid crystal display (10a,b,c,d) according to any preceding claim wherein the liquid crystal device (14) includes liquid crystal material.

20. A liquid crystal display (10a,b,c,d) according to claim 19 wherein the liquid crystal material is optically scattering in at least one state such that it diffuses light.

## Patentansprüche

1. Flüssigkristall-Anzeigevorrichtung (10a, b, c, d) zum Arbeiten in einer Durchlässigkeits-Betriebsart und einer Reflexions-Betriebsart, wobei die Anzeigevorrichtung umfasst: a) eine Flüssigkristall-Vorrichtung (14); b) ein elektro-optisches Element (27), umfassend eine im wesentlichen optisch transparente erste Elektrode (18), eine zweite reflektierende Elektrode (22) und eine dazwischen angeordnete Schicht Licht emittierenden Materials und c) ein Diffusionsmittel (28) zum Erweitern des Betrachtungswinkels der Anzeigevorrichtung, wobei das elektro-optische Element in der Durchlässigkeits-Betriebsart als eine Hintergrundbeleuchtung und in der Reflexions-Betriebsart als ein Reflektor fungiert, **dadurch gekennzeichnet, dass** das Diffusionsmittel die Polarisation des hindurchtretenden Lichtes aufrecht erhält.

2. Flüssigkristall-Anzeigevorrichtung (10a, b, c, d) nach Anspruch 1, wobei das Diffusionsmittel ein holografischer Diffusor ist.

3. Flüssigkristall-Anzeigevorrichtung (10a, b, c, d) nach Anspruch 1 oder 2, wobei das Diffusionsmittel weniger als 100 Mikrometer dick ist.

4. Flüssigkristall-Anzeigevorrichtung (10a, b, c, d) nach Anspruch 3, wobei das elektro-optische Element (27) ferner eine Schicht (20a) aus Loch-transportierendem Material und eine Schicht (20c) aus Elektronentransportierendem Material umfasst, wobei die Schicht (20b) Licht emittierenden Materials dazwischen angeordnet ist.

5. Flüssigkristall-Anzeigevorrichtung (10a, b, c, d) nach Anspruch 4, wobei die Schicht (20a) Lochtransportierenden Materials und/oder die Schicht (20c) Elektronen-transportierenden Materials im wesentlichen optisch transparent sind, im wesentlichen optisch isotropisch, so dass die Polarisation des durch sie hindurchtretenden Lichtes nicht beträchtlich verändert wird und im wesentlichen farblos ist, so dass die Farbe des hindurchtretenden Lichtes nicht beträchtlich geändert wird.

6. Flüssigkristall-Anzeigevorrichtung (10a, b, c, d) nach einem der vorhergehenden Ansprüche, wobei die Schicht (20b) Licht emittierenden Materials im wesentlichen optisch transparent ist, im wesentlichen optisch isotropisch, so dass die Polarisation des durch sie hindurchtretenden Lichtes nicht wesentlich verändert wird, und im wesentlichen farblos ist, so dass die Farbe des hindurchtretenden Lichtes nicht wesentlich geändert wird.

7. Flüssigkristall-Anzeigevorrichtung (10a, b, c, d) nach einem der Ansprüche 4 bis 6, wobei die zweite Elektrode (22) neben der Schicht (20a) aus Elektronen-transportierendem Material angeordnet ist.

8. Flüssigkristall-Anzeigevorrichtung (10a, b, c, d) nach einem der Ansprüche 4 bis 7, wobei die erste Elektrode (18) neben der Schicht (20a) aus Loch-transportierendem Material angeordnet ist.

9. Flüssigkristall-Anzeigevorrichtung (10a, b, c, d) nach einem der vorhergehenden Ansprüche, wobei das Licht emittierende Material ein Organolanthanid umfasst.

10. Flüssigkristall-Anzeigevorrichtung (10a, b, c, d) nach einem der Ansprüche 4 bis 9, wobei das Lochtransportierende Material ein aromatisches Diamin umfasst.

11. Flüssigkristall-Anzeigevorrichtung (10a, b, c, d) nach einem der Ansprüche 4 bis 10, wobei das Elektronen-transportierende Material ein Triazolderivat umfasst.

12. Flüssigkristall-Anzeigevorrichtung (10a, b, c, d) nach einem der vorhergehenden Ansprüche, enthaltend ein erstes polarisierendes Mittel (12).

13. Flüssigkristall-Anzeigevorrichtung (10a, b, c, d) nach Anspruch 12, enthaltend ein weiteres polarisierendes Mittel (16).

14. Flüssigkristall-Anzeigevorrichtung (10a, b) nach Anspruch 12 oder 13, wobei das Diffusionsmittel (28) neben dem ersten polarisierenden Mittel (12) angeordnet ist.

15. Flüssigkristall-Anzeigevorrichtung (10b) nach einem der Ansprüche 12 bis 14, wobei das Diffusionsmittel (28) zwischen dem ersten polarisierenden Mittel (12) und der Flüssigkristall-Vorrichtung (14) angeordnet ist.

16. Flüssigkristall-Anzeigevorrichtung (10c) nach Anspruch 13, wobei das Diffusionsmittel (28) zwischen der Flüssigkristall-Vorrichtung (14) und dem weiteren polarisierenden Mittel (16) angeordnet ist.

17. Flüssigkristall-Anzeigevorrichtung (10d) nach Anspruch 13, wobei das Diffusionsmittel (28) zwischen dem weiteren polarisierenden Mittel (16) und dem elektro-optischen Element (27) angeordnet ist.

18. Flüssigkristall-Anzeigevorrichtung (10a, b, c, d) nach einem der vorhergehenden Ansprüche, wobei die zweite Elektrode so ausgebildet ist, dass sie Licht diffundiert.

19. Flüssigkristall-Anzeigevorrichtung (10a, b, c, d) nach einem der vorhergehenden Ansprüche, wobei die Flüssigkristall-Vorrichtung (14) Flüssigkristall-Material enthält.

20. Flüssigkristall-Anzeigevorrichtung (10a, b, c, d) nach Anspruch 19, wobei das Flüssigkristall-Material in wenigstens einem Zustand optisch streut, so dass es Licht diffundiert.

## Revendications

1. Affichage à cristaux liquides (10a,b,c,d) capable de fonctionner en mode transmissif et en mode réflectif, l'affichage comprenant: a) un dispositif à cristaux liquides (14); b) un élément électro-optique (27) comprenant une première électrode essentiellement optiquement transparente (18), une seconde électrode réflective (22) et une couche de matériau émettant de la lumière placée entre les deux, et c) un moyen de diffusion (28) servant à augmenter l'angle de visée de l'affichage, dans lequel, en mode transmissif, l'élément électro-optique joue le rôle de rétroéclairage et, en mode réflectif, l'élément électro-optique joue le rôle de réflecteur, **caractérisé en ce que** le moyen de diffusion conserve la polarisation de la lumière qui le traverse.

2. Affichage à cristaux liquides (10a,b,c,d) selon la revendication 1 dans lequel le moyen de diffusion est un diffuseur holographique.

3. Affichage à cristaux liquides (10a,b,c,d) selon la revendication 1 ou 2 dans lequel le moyen de diffusion a une épaisseur inférieure à 100 micromètres.

4. Affichage à cristaux liquides (10a,b,c,d) selon la revendication 3 dans lequel l'élément électro-optique (27) renferme aussi une couche (20a) de matériau de transport de trous et une couche (20c) de matériau de transport d'électrons, la couche (20b) de matériau émettant de la lumière étant placée entre les deux.

5. Affichage à cristaux liquides (10a,b,c,d) selon la revendication 4 dans lequel la couche (20a) de matériau de transport de trous et/ou la couche (20c) de matériau de transport d'électrons sont essentiellement optiquement transparentes, essentiellement optiquement isotropes pour que la polarisation de la lumière les traversant ne soit essentiellement pas modifiée et essentiellement incolores pour que la couleur de la lumière les traversant ne soit essentiellement pas modifiée.

6. Affichage à cristaux liquides (10a,b,c,d) selon l'une quelconque des revendications précédentes dans lequel la couche (20b) de matériau émettant de la lumière est essentiellement optiquement transparente, essentiellement optiquement isotrope pour que la polarisation de la lumière la traversant ne soit essentiellement pas modifiée et essentiellement incolore pour que la couleur de la lumière la traversant ne soit essentiellement pas altérée.

7. Affichage à cristaux liquides (10a,b,c,d) selon l'une quelconque des revendications 4 à 6 dans lequel la seconde électrode (22) est placée en position adjacente à la couche (20c) de matériau de transport d'électrons.

8. Affichage à cristaux liquides (10a,b,c,d) selon l'une quelconque des revendications 4 à 7 dans lequel la première électrode (18) est placée en position adjacente à la couche (20a) de matériau de transport de trous.

9. Affichage à cristaux liquides (10a,b,c,d) selon l'une quelconque des revendications précédentes dans lequel le matériau émettant de la lumière contient un organolanthanide.

10. Affichage à cristaux liquides (10a,b,c,d) selon l'une quelconque des revendications 4 à 9 dans lequel le matériau de transport de trous contient une diamine aromatique.

11. Affichage à cristaux liquides (10a,b,c,d) selon l'une quelconque des revendications 4 à 10 dans lequel le matériau de transport d'électrons contient un dérivé de triazole.

12. Affichage à cristaux liquides (10a,b,c,d) selon l'une quelconque des revendications précédentes comprenant un premier dispositif polarisant (12).

13. Affichage à cristaux liquides (10a,b,c,d) selon la revendication 12 comprenant un autre dispositif polarisant (16).

14. Affichage à cristaux liquides (10a,b) selon la revendication 12 ou 13 dans lequel le moyen de diffusion (28) est placé en position adjacente au premier dispositif polarisant (12).

15. Affichage à cristaux liquides (10b) selon l'une quelconque des revendications 12 à 14 dans lequel le moyen de diffusion (28) est placé entre le premier dispositif polarisant (12) et le dispositif à cristaux liquides (14).

16. Affichage à cristaux liquides (10c) selon la revendication 13 dans lequel le moyen de diffusion (28) est placé entre le dispositif à cristaux liquides (14) et l'autre dispositif polarisant (16).

17. Affichage à cristaux liquides (10d) selon la revendication 13 dans lequel le moyen de diffusion (28) est placé entre l'autre dispositif polarisant (16) et l'élément électro-optique (27).

18. Affichage à cristaux liquides (10a,b,c,d) selon l'une quelconque des revendications précédentes dans lequel la seconde électrode est formée de manière à diffuser la lumière.

19. Affichage à cristaux liquides (10a,b,c,d) selon l'une quelconque des revendications précédentes dans lequel le dispositif à cristaux liquides (14) contient un matériau à cristaux liquides.

20. Affichage à cristaux liquides (10a,b,c,d) selon la revendication 19 dans lequel le matériau à cristaux liquide a un effet de dispersion optique dans au moins un état de manière à diffuser la lumière.
